# EUROPÄISCHE PATENTSCHRIFT

(11) **EP 0 527 400 B1**
(45) Veröffentlichungstag und Bekanntmachung des Hinweises auf die Patenterteilung: **16.04.1997**
(21) Anmeldenummer: 92113070.4
(22) Anmeldetag: 31.07.1992
(51) Int. Cl.: G01G 3/18, G01L 1/26

(54) **Vorrichtung zum Messen von Kräften**
Force measuring device
Dispositif capteur de force

(30) Priorität: 02.08.1991 DE 4125580
(43) Veröffentlichungstag der Anmeldung: 17.02.1993
(73) Patentinhaber: CARL SCHENCK AG, D-64273 Darmstadt (DE)
(72) Erfinder: Bischoff, Brüne, W-Darmstadt (DE); Klein, Dietrich, W-6100 Darmstadt (DE); Rettig, Manfred, D-6109 Mühltal 4 (DE)
(74) Vertreter: Brandt, Ernst-Ulrich, Dipl.-Phys., Dipl.-Ing.

(56) Entgegenhaltungen:
- EP-A- 0 053 337
- DE-A- 3 404 936
- DE-B- 1 806 668
- US-A- 4 541 496
- US-A- 4 958 526

## Beschreibung

Die Erfindung betrifft eine Vorrichtung zum Messen von Kräften mit einer Meßfeder, die in Abhängigkeit von der Belastung verformbar ist, und mit elektrischen Mitteln zum Messen der Verformung.

Derartige Vorrichtungen werden beispielsweise als Wägezellen oder Kraftaufnehmer eingesetzt. Problematisch bei solchen elektrischen Meßvorrichtungen ist der das Meßergebnis verfälschende Einfluß der Temperatur. Zur Lösung des elektro-thermischen Problems wurde bereits bei bekannten Meßvorrichtungen ein temperaturveränderlicher Widerstand in eine Meßbrückenschaltung eingefügt, um Temperaturfehler des Nullsignals zu kompensieren. Aus der DE 3404936 Al ist auch eine Wägezelle mit zwei auf einem Dehnungsmeßstreifen unmittelbar nebeneinander angeordneten temperaturabhängigen Widerständen zur Konstanthaltung des Nullpunktes bei sich ändernder Temperatur bekannt geworden.

Diese bekannten Kompensationsverfahren setzen jedoch eine ausreichende Homogenität der Temperaturverteilung im gesamten Aufnehmer voraus.

Im praktischen Einsatz solcher Kraftmeßvorrichtungen sind diese idealen Bedingungen meist nicht gegeben. Vielmehr tritt oft - insbesondere verursacht durch unsymmetrische Erwärmung durch Sonneneinstrahlung oder durch Kontakt mit sich im Betrieb erwärmenden Bauteilen - ein räumlich nicht konstanter Temperaturverlauf auf. Je nach Kraftaufnehmerbauart können durch entsprechende Wärmedehnungen ganz enorme Verfälschungen des Meßergebnisses auftreten.

Der Erfindung liegt daher die Aufgabe zugrunde, eine gattungsgemäße Vorrichtung zu schaffen, die auf kostengünstige und einfach realisierbare Weise eine Kompensation ungleichmäßiger Temperaturverteilung in der Vorrichtung ermöglicht.

Erfindungsgemäß wird diese Aufgabe dadurch gelöst, daß im Bereich der Meßfeder und/oder im Bereich derjenigen Bauteile, die der Krafteinleitung in die Meßfeder dienen, zum Zwecke der Kompensation von Temperaturgradienten mindestens ein Paar wesentlich voneinander beabstandeter temperaturempfindlicher elektrischer Elemente angeordnet und mit den elektrischen Mitteln verbunden ist, wobei die temperaturabhängige Änderung der Wirkung der Elemente eines Paares gegensinnig ist.

Bei einer bevorzugten Ausführungsform der Erfindung ist vorgesehen, daß ein Element des Paares an einer ersten und das andere Element an einer zweiten Krafteinleitungszone angeordnet ist. Da die Wärme sehr häufig über die Krafteinleitungszonen dem Aufnehmer zugeführt wird, läßt sich dadurch eine Temperaturkompensation besonders wirksam vornehmen.

Für den in der Praxis häufig vorkommenden Anwendungsfall ist eine Ausführungsform vorgesehen, bei welcher sich die beiden Krafteinleitungszonen gegenüber liegen und die temperaturempfindlichen elektrischen Elemente symmetrisch in Bezug auf die zwischen den Krafteinleitungszonen vorgesehene Meßfeder angeordnet sind. Durch diese Ausführung sind Temperaturgradienten, welche entlang der axialen Erstreckung des Aufnehmers verlaufen, kompensierbar.

Als elektrische Mittel werden vorzugsweise Dehnungsmeßstreifen verwendet, welche insbesondere in Form einer elektrischen Meßbrückenschaltung miteinander verbunden sind. Grundsätzlich können jedoch zur Verformungsmessung der Meßfeder auch andere elektrische Mittel, d. h., induktive oder kapazitive, magnetostriktive oder dergleichen Mittel verwandt werden.

Eine besonders einfache und robuste Ausführungsform der Erfindung sieht vor, daß die elektrischen Elemente temperaturabhängige Widerstände sind. Zum Abgleich der Temperaturabhängigkeit kann zu diesen Widerständen ein Korrekturwiderstand parallel geschaltet werden.

Besonders wirksam ist die beschriebene Temperaturgradientenkompensation bei einem Aufnehmer, dessen Meßfeder als ringförmiger Biegekörper ausgebildet ist, in welchen die zu messende Kraft über zwei rohrförmige Körper eingeleitet wird, da diese an sich bekannten Aufnehmer empfindlich gegenüber unsymetrischer Aufheizung sind.

Eine Ausführungsform der Erfindung, die universell anwendbar ist und auch eine Nachrüstung vorhandener Kraftmeßvorrichtungen gestattet, sieht vor, daß die temperaturempfindlichen elektrischen Elemente auf separaten Bauteilen angeordnet sind. Um diese Nachrüstung auch von der elektrischen Seite her besonders einfach vornehmen zu können, ist bei einer weiteren Ausführungsform der Erfindung vorgesehen, daß die Wichtung der temperaturempfindlichen Elemente über Korrekturwiderstände erfolgt, die außerhalb der Vorrichtung vorgesehen und mittels Leitungen mit den elektrischen Mitteln verbunden sind.

Weitere vorteilhafte Merkmale sowie die Funktion der Erfindung ergeben sich aus der nachstehenden Beschreibung von Ausführungsbeispielen anhand der Zeichnung. Hierzu zeigt Figur 1 einen Längsschnitt durch einen Aufnehmer und Figur 2 die schematische Darstellung einer Meßbrückenschaltung. Figur 3 zeigt eine weitere Ausführung der Erfindung.

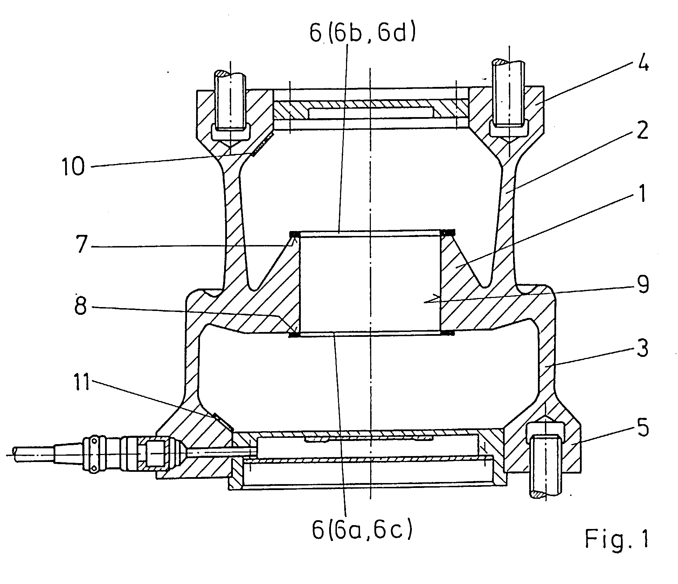

Der in Figur 1 dargestellte Kraftaufnehmer besitzt eine Meßfeder 1, welche als ringförmiger Verformungskörper mit dreieckigem Querschnitt ausgebildet ist. Die Krafteinleitung erfolgt über zwei Rohrkörper 2, 3, wobei der Rohrkörper 2 einen geringeren Durchmesser als der Rohrkörper 3 aufweist. Die von der Meßfeder 1 abweisenden Enden der Rohrkörper 2, 3 sind als Anschlußflansche 4 bzw. 5 ausgebildet. Der radial innere Bereich jedes ringförmigen Anschlußflansches ist durch einen Deckel verschlossen.

Durch den radialen Abstand zwischen den beiden Rohrkörpern 2 und 3 wird durch eine Belastung in axialer Richtung des Kraftaufnehmers eine Biegebeanspruchung der radial innerhalb des Rohrkörpers 2 liegenden Meßfeder 1 bewirkt. Durch entsprechende konstruktive Auslegung der radialen Abstände zwischen den beiden Rohrkörpern 2, 3 und zwischen dem Rohrkörper 2 und der Meßfeder 1 läßt sich das Hebelverhältnis und damit das Biegemoment auf die Meßfeder 1 bestimmen.

Zur Messung der durch die Biegebelastung ausgelösten Verformung der Meßfeder 1 dienen mechanisch-elektrische Wandlerelemente, welche insbesondere als Dehnungsmeßstreifen 6 ausgebildet sind, und die an den Stirnflächen 7, 8 der ringförmigen Meßfeder 1 in der Nähe der Längsbohrung 9 angeordnet sind.

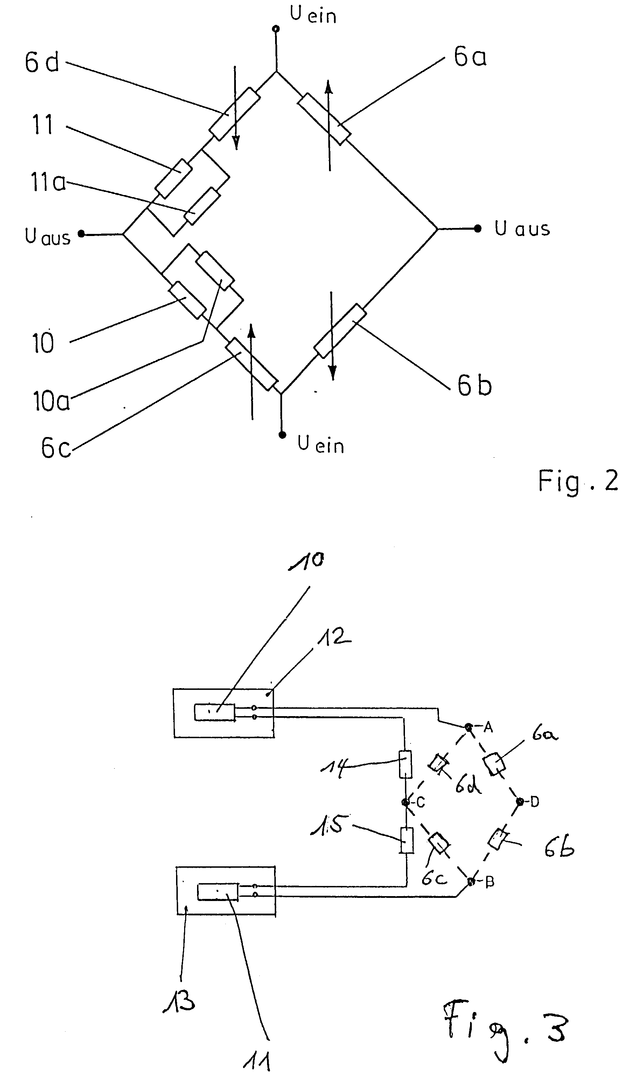

Die Dehnungsmeßstreifen sind in Form einer an sich bekannten Wheatstoneschen Meßbrückenschaltung miteinander verbunden. In dieser Meßbrückenschaltung, die in Figur 2 näher dargestellt ist, sind zwei temperaturveränderliche Widerstände 10, 11 eingebaut.

Im Ausführungsbeispiel soll ein Temperaturgradient in axialer Erstreckung kompensiert werden, weshalb einer dieser Widerstände, nämlich der Widerstand 10, im Bereich des Anschlußflansches 4 und der andere Widerstand 11, im Bereich des Anschlußflansches 5 angeordnet, d. h. thermisch leitend mit dem entsprechenden Anschlußflansch, verbunden ist. Die Versorgungsspannung der Meßbrücke und das Ausgangssignal werden über ein durch das Kraftaufnehmergehäuse geführtes mehradriges Kabel geleitet.

Die Widerstände 10 und 11 sind derart in die Brückenschaltung gemäß Figur 2 eingebaut, daß der eine Widerstand bei Erwärmung das Nullsignal in positive Richtung und der andere in negative Richtung verschiebt. Bei gleichmäßiger Erwärmung des Kraftaufnehmers heben sich somit die Wirkungen der temperaturbedingten Widerstandsänderungen auf, während bei ungleichmäßiger Erwärmung der beiden Widerstände eine Brückenverstimmung eintritt. Durch entsprechende Abstimmung der Widerstände bzw. thermischen Widerstandsänderungen wird sichergestellt, daß die durch die Brückenverstimmung bewirkte Nullsignaländerung genau die durch die thermische Verspannung des Kraftaufnehmers bewirkte Nullsignaländerung kompensiert.

Diese Wirkungsweise ergibt sich auch eindeutig aus Figur 2, in welcher mit Uein , die Anschlußpunkte für die Speisespannung bezeichnet sind, während an den Punkten Uaus das Ausgangssignal abgegriffen wird. Die Dehnungsmeßstreifen 6a und 6c sind so an der Meßfeder 1 befestigt, daß sie bei Druckbelastung des Kraftaufnehmers gedehnt werden. Die Dehnungsmeßstreifen 6b und 6d werden bei gleicher Belastungsrichtung gestaucht. Der Widerstand 10 ist mit dem Dehnungsmeßstreifen 6c und der Widerstand 11 mit dem Dehnungsmeßstreifen 6d in Reihe geschaltet. Zum Abstimmen der Temperaturabhängigkeit des Widerstandes 10 bzw. 11 dient jeweils ein zu letzterem parallel geschalteter Abgleichwiderstand 10a bzw. 11a.

Figur 3 zeigt eine Ausführung der Erfindung, mit welcher es möglich ist, Nullsignalverschiebungen durch ungleichmäßiges Erwärmen eines Kraftaufnehmers durch Abgleicharbeiten zu kompensieren, welche außerhalb des eigentlichen Aufnehmers oder einer Wägevorrichtung vorzunehmen sind. Auf diese Weise wird außerdem die Möglichkeit geschaffen, eine bereits existierende Kraftmeßvorrichtung nachträglich mit einer Temperaturgradienten-Kompensation auszustatten. Hierzu sind die temperaturveränderlichen Widerstände 10 bzw. 11 auf thermisch gut leitenden Adapterplatten 12 und 13 appliziert, welche im Bereich einer kälteren bzw. wärmeren Zone eines Kraftaufnehmers oder einer Wägevorrichtung montiert werden. Die temperaturveränderlichen Widerstände 10 und 11 werden dann durch elektrische Zuleitungen mit der eigentlichen Aufnehmerelektrik verbunden. Letztere ist in Figur 3 als Vollbrücke mit den Dehnungsmeßstreifen 6a bis 6d gestrichelt dargestellt. Die Widerstände 10 bzw. 11 und die zugehörigen Abgleichwiderstände 14 bzw. 15 sind in je einem Zweig angeordnet, der parallel zu dem Dehnungsmeßstreifen 6d bzw. 6c geschaltet ist. Der Widerstand 10 und der Abgleichwiderstand 14 befinden sich in einem Zweig, der mit der Brückenversorgungsspannung A und dem Diagonalabgriff C verbunden ist, während der Zweig mit dem Widerstand 11 und dem Abgleichwiderstand 15 an die Brückenversorgungsspannung B und die Anschlußstelle C für den Diagonalspannungsangriff angeschlossen ist. Während die Dehnungsmeßstreifen 6a bis 6d direkt am Aufnehmer appliziert sind, befinden sich die Abgleichwiderstände 14 und 15 in einem separaten Schaltschrank außerhalb des Aufnehmers. Diese Ausführung mit den Widerständen zur Temperaturgradienten-Kompensation 10 und 11 sowie 14 und 15 in einer Hilfsbrücke eignet sich auch besonders zum Durchführen einer Temperaturgradienten-Kompensation für mehrere Aufnehmer, die beispielsweise in einer Wägeanlage zusammengeschaltet sind, wobei nur eine einzige Kompensationsschaltung für mehrere Aufnehmer vorhanden sein muß.

## Patentansprüche

1. Vorrichtung zum Messen von Kräften mit einer Meßfeder (1), die in Abhängigkeit von der Belastung verformbar ist und mit elektrischen Mitteln (6) zum Messen der Verformung, dadurch gekennzeichnet, daß im Bereich der Meßfeder (1) und/oder im Bereich derjenigen Bauteile (2, 3), die der Krafteinleitung in die Meßfeder (1) dienen, zum Zwecke der Kompensation von Temperaturgradienten mindestens ein Paar (10, 11) wesentlich voneinander beabstandeter temperaturempfindlicher elektrischer Elemente angeordnet und mit den elektrischen Mitteln (6) verbunden ist, wobei die temperaturabhängige Änderung der Wirkung der Elemente (10,11) eines Paares gegensinnig ist.

2. Vorrichtung nach Anspruch 1, dadurch gekennzeichnet, daß ein Element (10) des Paares an einer ersten und das andere Element (11) an einer zweiten Krafteinleitungszone (4 bzw. 5) angeordnet ist.

3. Vorrichtung nach Anspruch 2, dadurch gekennzeichnet, daß sich die beiden Krafteinleitungszonen (4, 5) gegenüber liegen und die Elemente (10, 11) symmetrisch in Bezug auf die zwischen den Krafteinleitungszonen vorgesehene Meßfeder (1) angeordnet sind.

4. Vorrichtung nach einem der vorhergehenden Ansprüche, dadurch gekennzeichnet, daß die elektrischen Mittel Dehnungsmeßstreifen (6a bis 6d) sind.

5. Vorrichtung nach einem der vorhergehenden Ansprüche, dadurch gekennzeichnet, daß mehrere elektrische Mittel (6a bis 6d) in Form einer elektrischen Meßbrückenschaltung miteinander verbunden sind.

6. Vorrichtung nach einem der vorhergehenden Ansprüche, dadurch gekennzeichnet, daß die elektrischen Elemente temperaturabhängige Widerstände (10, 11) sind.

7. Vorrichtung nach Anspruch 6, dadurch gekennzeichnet, daß zu den temperaturabhängigen Widerständen (10, 11) jeweils ein Korrekturwiderstand (10a, 11a) parallel geschaltet ist.

8. Vorrichtung nach einem der vorhergehenden Ansprüche, dadurch gekennzeichnet, daß die Meßfeder als ringförmige Biegekörper (1) ausgebildet ist, in welchen die zu messende Kraft über zwei rohrförmige Körper (2, 3) eingeleitet wird.

9. Vorrichtung nach einem der vorhergehenden Ansprüche, dadurch gekennzeichnet, daß die temperaturempfindlichen elektrischen Elemente (10, 11) auf separaten Bauteilen (12, 13) angeordnet sind.

10. Vorrichtung nach einem der vorhergehenden Ansprüche, dadurch gekennzeichnet, daß die Wichtung der temperaturempfindlichen Elemente (10, 11) über Korrekturwiderstände (14, 15) erfolgt, die außerhalb der Vorrichtung vorgesehen und mittels Leitungen mit den elektrischen Mitteln (6a bis 6d) verbunden sind.

## Claims

1. Device for measuring forces using a measuring spring (1), which is deformable in dependence upon the load, and using electric means (6) to measure the deformation, characterized in that for the purpose of compensating temperature gradients at least one pair (10, 11) of temperature-sensitive electric elements, which are substantially spaced apart from one another, is disposed in the region of the measuring spring (1) and/or in the region of the structural parts (2, 3) used for force introduction into the measuring spring (1) and is connected to the electric means (6), the temperature-dependent variation of the effect of the elements (10, 11) of a pair being in opposing directions.

2. Device according to claim 1, characterized in that one element (10) of the pair is disposed at a first and the other element (11) is disposed at a second force introduction zone (4 or 5).

3. Device according to claim 2, characterized in that the two force introduction zones (4, 5) lie opposite one another and the elements (10, 11) are arranged symmetrically in relation to the measuring spring (1) provided between the force introduction zones.

4. Device according to one of the preceding claims, characterized in that the electric means are strain gauges (6a to 6d).

5. Device according to one of the preceding claims, characterized in that a plurality of electric means (6a to 6d) are connected to one another in the form of a measuring bridge circuit.

6. Device according to one of the preceding claims, characterized in that the electric elements are temperature-dependent resistors (10, 11) .

7. Device according to claim 6, characterized in that a corrective resistor (10a, 11a) is connected in parallel to each of the temperature-dependent resistors (10, 11).

8. Device according to one of the preceding claims, characterized in that the measuring spring takes the form of an annular bending body (1), into which the force to be measured is introduced via two tubular bodies (2, 3).

9. Device according to one of the preceding claims, characterized in that the temperature-sensitive electric elements (10, 11) are disposed on separate structural parts (12, 13).

10. Device according to one of the preceding claims, characterized in that the weighting of the temperature-sensitive elements (10, 11) is effected by means of corrective resistors (14, 15), which are provided outside of the device and connected by lines to the electric means (6a to 6d).

## Revendications

1. Dispositif de mesure de forces comportant un ressort de mesure (1), qui est déformable en fonction de la charge et comportant des moyens électriques (6) pour la mesure de la déformation, caractérisé en ce que dans la zone du ressort de mesure (1) et/ou dans la zone des composants (2, 3), qui servent à l'introduction des forces dans le ressort de mesure (1), il est prévu, en vue de la compensation de gradients de température, au moins une paire (10, 11) d'éléments électriques sensibles à la température, sensiblement espacés les uns des autres et qui est reliée au moyens électriques (6), la variation, dépendant de la température de l'effet des éléments (10, 11) d'une paire, étant en sens contraire.

2. Dispositif selon la revendication 1, caractérisé en ce qu'un élément (10) de la paire est placé sur une première zone d'introduction de force (4) et l'autre élément (11) sur une deuxième zone d'introduction de force (5).

3. Dispositif selon la revendication 2, caractérisé en ce que les deux zones d'introduction de force (4, 5) se situent en vis-à-vis et les éléments (10, 11) sont disposés symétriquement par rapport au ressort de mesure (1) prévu entre les zones d'introduction de force.

4. Dispositif selon l'une des revendications précédentes, caractérisé en ce que les moyens électriques sont des bandes de mesure d'allongement (6a à 6b).

5. Dispositif selon l'une des revendications précédentes, caractérisé en ce que plusieurs moyens électriques (6a à 6d) sont reliés entre eux sous la forme d'un circuit à pont de mesure électrique.

6. Dispositif selon l'une des revendications précédentes, caractérisé en ce que les éléments électriques sont des résistances (10, 11) dépendant de la température.

7. Dispositif selon la revendication 6, caractérisé en ce qu'une résistance de correction (10a, 11a) est montée en parallèle à chacune des résistances (10, 11) dépendant de la température.

8. Dispositif selon l'une des revendications précédentes, caractérisé en ce que le ressort de mesure est conformé en corps de flexion (1) annulaire, dans lequel la force à mesurer est introduite par deux corps tubulaires (2, 3).

9. Dispositif selon l'une des revendications précédentes, caractérisé en ce que les éléments électriques (10, 11) sensibles à la température sont placés sur des composants (12, 13) séparés.

10. Dispositif selon l'une des revendications précédentes, caractérisé en ce que la pondération des éléments (10, 11) sensibles à la température s'effectue par des résistances de correction (14, 15), qui sont pourvues à l'extérieur du dispositif et qui sont reliées aux moyens électriques (6a à 6d) par des lignes.
